# EUROPEAN PATENT SPECIFICATION

(11) **EP 2 677 687 B1**
(45) Date of publication and mention of the grant of the patent: **22.07.2015**
(21) Application number: 12747574.7
(22) Date of filing: 13.02.2012
(51) Int. Cl.: G06Q 20/32, H04L 12/28, H04M 11/00

(54) **ELECTRONIC APPLIANCES, DIAGNOSTIC SYSTEM FOR ELECTRONIC APPLIANCES AND DIAGNOSTIC METHOD FOR ELECTRONIC APPLIANCES**
ELEKTRONISCHE ANWENDUNGEN, DIAGNOSESYSTEM FÜR ELEKTRONISCHE ANWENDUNGEN UND DIAGNOSEVERFAHREN FÜR ELEKTRONISCHE ANWENDUNGEN
APPAREILS ÉLECTRONIQUES, SYSTÈME ET PROCÉDÉ DE DIAGNOSTIC POUR APPAREILS ÉLECTRONIQUES

(30) Priority: 14.02.2011 KR 20110012876
(43) Date of publication of application: 25.12.2013
(73) Proprietor: LG Electronics Inc., Seoul 150-721 (KR)
(72) Inventor: KONG, Hyun Woo, Changwon-si Kyungsangnam-do 641-110 (KR)
(74) Representative: Urner, Peter
(86) International application number: PCT/KR2012/001040
(87) International publication number: WO 2012/111945

(56) References cited:
- WO-A1-01/57811
- WO-A2-2009/134090
- KR-A- 20010 104 586
- KR-A- 20030 075 690
- KR-A- 20100 112 949
- US-A1- 2002 029 575
- US-A1- 2008 222 048
- US-A1- 2010 260 426

## Description

### [Technical Field]

The present invention concerns a home appliance, a home appliance diagnosing system, and a home appliance diagnosing method. More specifically, the present invention relates to a home appliance outputting product information as a sequence of images, and a home appliance diagnosing system and method that analyzes the sequence of images output from the home appliance to thereby perform diagnosis on the home appliance.

### [Background Art]

When a home appliance causes an error while in operation, a user sends an inquiry to a service center and the user by himself takes care of erroneous symptoms or requests a service person to visit and handle it.

However, the user cannot precisely let the service center know the erroneous symptoms by the above measurements, and accordingly, the service center may properly respond to it.

For a user to inform a service center of erroneous symptoms of a home appliance, a scheme recently under considered which outputs the symptoms in the form of a sound that is then transferred to the service center through a phone. However, such scheme may cause a signal distortion due to ambient noise while a signal sound output from the home appliance is received by the phone and accordingly information cannot be precisely transferred to the service center.

Moreover, since the home appliance configures information to be transferred to the service center in the form of a sound by combining multiple signals with different frequencies, signal conversion takes long, and a user needs to hold on the phone until a signal sound output from the home appliance is completely received, thus causing inconvenience.

WO 2009/134090 A2 describes a home appliance system and an operation method thereof for checking a status of the home appliance, in order to provide for convenient after-sales service. The home appliance outputs product information as a predetermined sound and transmits the sound through a communication network, in particular, by a user holding a telephone handset to a portion of the home appliance from which the sound is coming, thereby making it easier for a service center at a remote place to check a status of the home appliance.

US 2002/029575 A1 describes a remote inspection device for a refrigerator which receives information about an operating state of the refrigerator transmitted from the refrigerator via a communication network continuously or at predetermined intervals. A home terminal of the refrigerator communicates with a home gateway that is connected to the internet.

US 2008/222048 A1 mentions that some mobile phones include computer software that enables the telephone to capture and read quick response (QR) matrix codes, allowing an individual to use the mobile phone to take a picture of or capture the QR code, decode it, and transmit the code and user's digital information to a remote system as a request for marketing materials to be sent to the user. US 2008/222048 A1 further describes a payment system, wherein a merchant requests and receives a bar code from a payment system, presents the barcode via a display screen, a web page, or a piece of paper, and a customer takes a photo using a mobile phone camera, scans or otherwise acquires the barcode and sends an SMS (short messaging service) message with the barcode to the payment system.

WO 01/57811 A1 describes a data manipulation device which contains a data processor and an input device for the capture of the data, e.g. a barcode scanner, and a communications interface for connection to a transmitter such as a mobile phone.

### [Disclosure]

### [Technical Problem]

An object of the present invention is to provide a home appliance, a home appliance diagnosing system, and a home appliance diagnosing method that may more precisely transfer product information to a diagnosing server.

Further, an object of the present invention is to provide a home appliance that may output product information more quickly.

Further, an object of the present invention is to provide a home appliance that may output product information using a plurality of images sequentially output and that may simply configure a displaying apparatus for outputting the plurality of images.

Further, an object of the present invention is to provide a home appliance diagnosing system and a home appliance diagnosing method that may prevent service personnel from being unnecessarily dispatched to take care of malfunctions of a home appliance.

### [Technical Solution]

A home appliance according to the present invention includes a selecting unit receiving a diagnosis command; a displaying unit outputting an image; and a controller performing control so that product information is converted into a plurality of images according to the diagnosis command entered to the selecting unit and the plurality of images are sequentially output through the displaying unit, wherein the controller performs control so that the product information is split into a plurality of unit data, each split unit data is encoded into a predetermined control signal, and the displaying unit sequentially outputs images corresponding to each unit data according to the control signal. For example, the displaying unit may include a plurality of light emission members that emit light in a predetermined pattern according to the control signal.

For example, the displaying unit may have the plurality of light emission members arranged vertically and horizontally in a grid pattern.

For example, the light emission members may include LEDs (Light Emitting Diodes).

For example, the displaying unit may further include a positioning marking unit marking a position where an image is recognized which is formed by a light emitting pattern of the plurality of light emission members.

For example, the displaying unit may sequentially output a plurality of QR (Quick Response) codes according to the controls signal. For example, the displaying unit may include an LED (Light Emitting Diode) panel.

For example, the controller may perform control so that the plurality of images are output at a predetermined time interval through the displaying unit.

For example, the product information may include at least one of operation information, usage information, and failure information of the home appliance.

A home appliance diagnosing system according to the present invention includes a home appliance adapted for splitting product information into a plurality of unit data and encoding each split unit data into a predetermined control signal, converting the product information into a plurality of images according to the control signals, and sequentially displaying the plurality of images; a terminal sequentially recognizing the plurality of images displayed on the home appliance, extracting the product information from the plurality of recognized images, and transmitting the product information through a network; and a diagnosing server receiving the product information through the network and performing diagnosis on the home appliance based on the product information.

A home appliance diagnosing method according to the present includes step (a) of converting information of a home appliance into a plurality of images according to a diagnosis command entered through a selecting unit; step (b) of sequentially outputting the plurality of images converted in step (a); and step (c) of sequentially recognizing the images output in step (b), extracting the product information from the plurality of images, and performing diagnosis on the home appliance.

### [Advantageous Effects]

According to the present invention, a home appliance, a home appliance diagnosing system, and a home appliance diagnosing method may precisely transfer product information of the home appliance to a service center even without a user specifically explaining erroneous symptoms of the home appliance to a service center.

Further, the home appliance according to the present invention may output product information as a sequence of images so that time of outputting product information may be reduced in comparison with when the product information is output as a sound. Accordingly, the same amount of product information may be output within a shorter time.

Further, the home appliance, home appliance diagnosing system and home appliance diagnosing method according to the present invention may precisely transfer product information of the home appliance to a diagnosing server regardless of nose created in the ambient environment where the home appliance is installed.

Further, the home appliance diagnosing system according to the present invention may increase reliability of product information transmitted to the diagnosing server through a user's terminal.

### [Description of Drawings]

Fig. 1 shows a home appliance and a home appliance diagnosing system according to an embodiment of the present invention.
Fig. 2 is a block diagram illustrating main components of a home appliance according to an embodiment of the present invention.
Fig. 3 shows an example of the displaying unit shown in Fig. 2.
Fig. 4 shows another example of the displaying unit shown in Fig. 2.
Fig. 5 is a flowchart illustrating a home appliance diagnosing method according to an embodiment of the present invention.
Fig. 6 shows main components of a refrigerator as an example of a home appliance according to an embodiment of the present invention.

### [Best Mode]

Advantages and features of the present invention and methods of achieving the same will be apparent by referring to the embodiments described below in detail with reference to the accompanying drawings. However, the present invention is not limited to the embodiments described below and various modifications may be made thereto. The embodiments are merely provided to thoroughly disclose the invention and to convey the category of the invention to one of ordinary skill in the art. The present invention is defined by the appended claims. The same reference numerals denote the same elements throughout the specification.

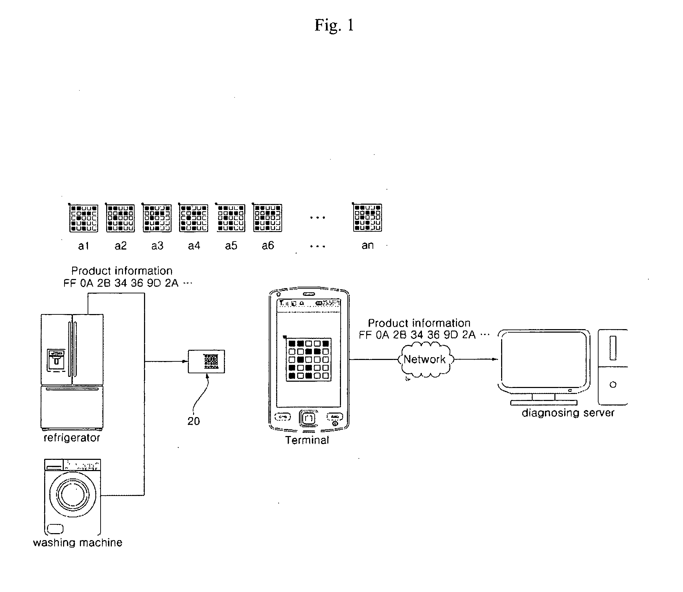

Fig. 1 shows a home appliance and a home appliance diagnosing system according to an embodiment of the present invention. Although Fig. 1 illustrates a refrigerator and a washing machine as examples of the home appliance, the home appliance is not limited thereto.

Referring to Fig. 1, the home appliance diagnosing system according to an embodiment of the present invention includes a home appliance that converts product information to a plurality of images and sequentially displays the plurality of images, a terminal that recognizes the plurality of images sequentially displayed by the home appliance, extracts the product information from the plurality of recognized images, and transmits the product information through a network, and a diagnosing server that is connected to the network and receives the product information transmitted from the terminal and performs diagnosis on the home appliance.

The product information may include at least one of operation information, usage information, and failure information of the home appliance.

The operation information may include configuration information set by a user and information on the operation state of the home appliance. For example, in the case of a refrigerator, the operation information may include temperature configuration information (configuration information) of a refrigerating compartment or freezing compartment as set by a user and a current temperature value (information on the operation state) of the refrigerating compartment or freezing compartment as sensed by a sensing unit.

The usage information may include identification information for identifying the type of the home appliance and information on an operation history of the home appliance. For example, in the case of a refrigerator, the identification information may be, e.g., information for identifying that a home appliance targeted for diagnosis is a refrigerator, and the operation history information may be, e.g., information regarding patterns in which the refrigerator have been operating within a few recent hours.

The failure information may include information on malfunctions of the home appliance. For example, the failure information may be error codes obtained by estimating whether components of the home appliance cause malfunctions from values sensed by a sensing unit 40.

A plurality of images (a1 to an) converted from the product information are sequentially output through a displaying unit 20 provided in the home appliance. A user recognizes the plurality of images (a1 to an) output through the displaying unit 20 by using a terminal. The terminal may be a mobile terminal such as a mobile phone having a video capturing device. As an example, the mobile terminal may provide a standardized interface and flat form for application developers so as to perform such functions as PC (Personal Computers) as well as calling functions. Further, in the mobile terminal may be installed an application for inversely extracting the product information from the images recognized by the video capturing device. The images recognized by the capturing device may be transmitted through a network. Or, the product information may be inversely extracted from the images through the application, and the extracted product information may be transmitted through a network.

The diagnosing server is connected to the network and receives data transmitted through the network and diagnoses the state of the home appliance.

The network may be, e.g., a mobile telecommunication network based on FDMA (Frequency Division Multiple Access), GSM (Global System for Mobile Communications), CDMA (Code Division Multiple Access), W-CDMA (Wideband Code Division Multiple Access), or CDMA 2000, wired Internet or wireless Internet such as Wi-Fi enabling wireless communication between devices through a wireless LAN.

In case inversely extracting the product information from the plurality of images output from the home appliance is performed in the terminal, the diagnosing server directly receives the product information from the terminal through the network and performs diagnosis on the home appliance based on the product information. Such scheme may be applicable to a terminal that may have an image capturing function and may drive an application inversely extracting product information from a captured image. The diagnosing server may include a communication unit that receives product information transmitted from the terminal through the network, a diagnosis data storing unit that stores diagnosis data, and a diagnosing unit that performs diagnosis on the home appliance by comparing the product information received through the communication unit with the diagnosis data stored in the diagnosis data storing unit.

Meanwhile, in case data transmitted through the network is obtained by making, as data, a plurality of images representing the product information of the home appliance, the diagnosing unit inversely extracts the product information from the data transmitted from the communication unit through the network and performs diagnosis on the home appliance based on the extracted product information. Such scheme enables the home appliance to be diagnosed by a terminal that has functions of capturing images, making captured images as data and transferring the data through the network but that cannot drive an application for inversely extracting the product information from the captured images.

Meanwhile, the diagnosing server may further include a diagnosis result displaying unit that outputs a diagnosis result of the home appliance as analyzed by the diagnosing unit to be recognized by stand-by personnel in the service center. Further, the communication unit of the diagnosing server may be configured to transmit a diagnosis result obtained by the diagnosing unit of the diagnosing server to the terminal through a communication network as well as to receive data transmitted from the terminal, and in such case, a user may immediately recognize the diagnosis result through the terminal.

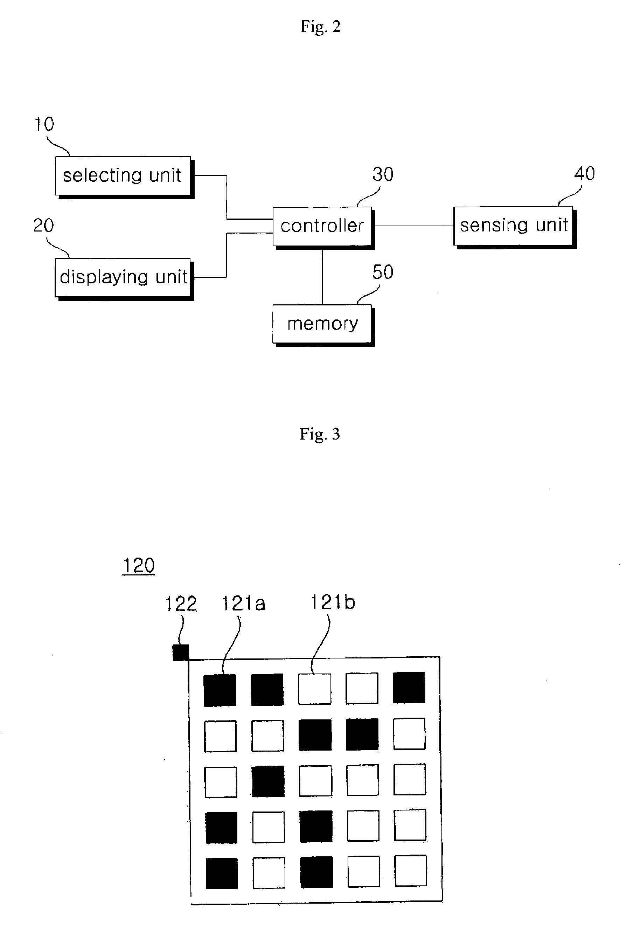

Fig. 2 is a block diagram illustrating main components of a home appliance according to an embodiment of the present invention.

Fig. 3 shows an example of the displaying unit shown in Fig. 2.

Referring to Fig. 2, the home appliance according to an embodiment of the present invention includes a selecting unit 10 for receiving a predetermined diagnosis command from a user, a displaying unit 20 for outputting an image, and a controller 30 for converting product information to a plurality of images according to the diagnosis command entered to the selecting unit 10 and for performing control to enable the plurality of images to be sequentially output through the displaying unit 20.

If a diagnosis command is entered through the selecting unit 10, the controller 30 performs control so that an operation being currently underway is paused or terminated and enters into a diagnosis mode, the product information is split into a plurality of unit data, each split unit data is encoded into a predetermined control signal, and the selecting unit 10 may sequentially output images respectively corresponding to the unit data depending on the control signal.

Referring to Fig. 3, a displaying unit 120, which is an example of the displaying unit 20 shown in Fig. 2, may include a plurality of light emission members 121 that emit light in a predetermined pattern according to the control signal from the controller 30. Fig. 1 shows an example where a plurality of images a1 to an are sequentially output according to the light emission pattern of the plurality of light emission members 121. Each of image a1 to an respectively corresponds to each of unit data split from the product information and may be output at a predetermined time interval. In Fig. 3, reference 121a denotes a light-off light emission member, and reference 121b denotes a light-on light emission member.

The displaying unit 120 has the plurality of light emission members 121 arranged vertically/horizontally in a grid pattern. The shape of an image displayed varies depending on the pattern in which the plurality of light emission members 121 emit light. The light emission members 121 may be LEDs (Light Emitting Diodes).

The displaying unit 120 may include a positioning marking unit 122. The positioning marking unit 122 marks a position where an image is recognized which is formed according to the light emitting pattern of the light emission members 121. In other words, a position which functions as a standard when an image displayed on the displaying unit 120 is read is marked. When images captured by the terminal is analyzed by an application, the images may be arranged with respect to the positioning marking unit 122, thereby providing exact information.

Meanwhile, a sensing unit 40 senses the operation state of the home appliance. The sensing unit 40 may sense operation information of various devices constituting the home appliance and state information such as temperature, moisture, dryness, power consumption, and electric conductivity which need to be sensed to control the devices.

A memory 50 may store control data of the home appliance and product information constituted of operation information of the home appliance, usage information and/or failure information.

The controller 30 may control the overall operation of the home appliance according to the control data stored in the memory 50, and upon diagnosis, may perform control so that the product information stored in the memory 50 is called out and split into a plurality of unit data, each split unit data is encoded into a predetermined control signal, and the displaying unit 120 sequentially outputs images corresponding to each unit data depending on the control signal.

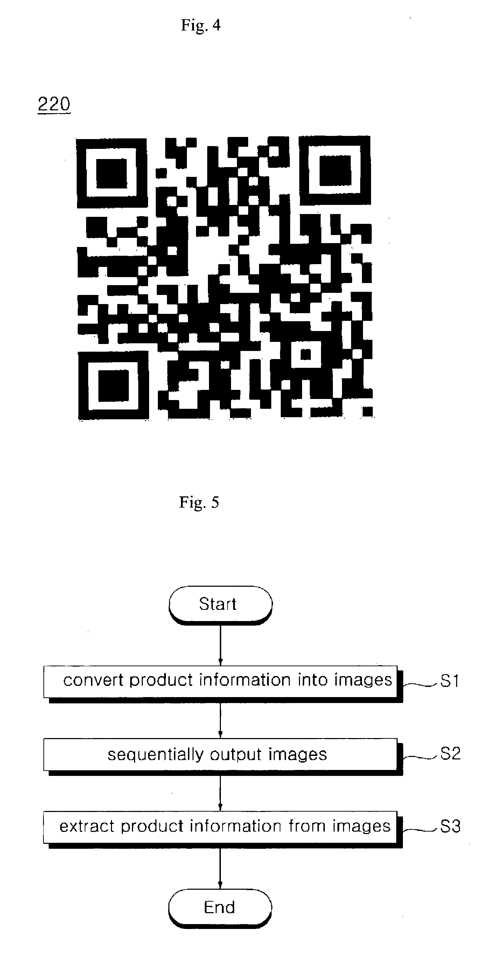

Fig. 4 shows another example of the displaying unit shown in Fig. 2. Referring to Fig. 4, the displaying unit 220 may sequentially output a sequence of QR (Quick Response) codes including product information according to a control signal of the controller 30. Here, the QR codes are matrix-like two-dimensional bar codes that represent information in a lattice pattern. The displaying unit 220 may include an LED panel to display the QR codes.

Fig. 5 is a flowchart illustrating a home appliance diagnosing method according to an embodiment of the present invention. Referring to Fig. 5, the home appliance displaying area according to an embodiment of the present invention includes a step S1 of converting product information of a home appliance to a plurality of images according to a diagnosis command entered through the selecting unit 10, a step S2 of sequentially outputting the plurality of converted images, and a step S3 of sequentially recognizing the output images, extracting the product information from the recognized images, and performing diagnosis on the home appliance.

Steps S1 and S2 are performed by the home appliance. As described above, if a diagnosis command is entered through the selecting unit 10, the controller 30 performs control so that the operation currently underway is paused or terminated and enters into a diagnosis mode, the product information is split into a plurality of unit data, each split unit data is encoded into a predetermined control signal, and the displaying unit 20 sequentially outputs images corresponding to each unit data according to the control signal.

In step S3, extracting the product information from a sequence of images output from the home appliance is conducted by the terminal or the diagnosing server. In either way, the sequence of images including the product information output from the home appliance is recognized through a video capturing device provided in the terminal, but inversely extracting the product information from the images recognized through the video capturing device may be carried out by either the terminal or the diagnosing server.

For example, in case inverse extraction of the product information from the plurality of images output from the home appliance is done by the terminal, the terminal transmits the extracted product information to the diagnosing server through the network, and the diagnosing server performs diagnosis on the home appliance by analyzing the received product information.

Otherwise, in case the terminal merely captures the images output from the home appliance and transmits image data through the network, the diagnosing server inversely extracts the product information from the image data transmitted through the network and diagnoses the home appliance through the extracted product information.

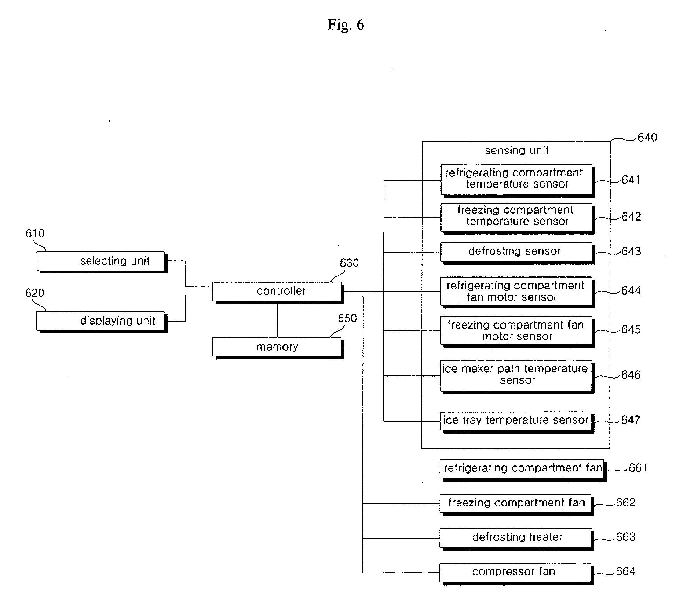

Fig. 6 shows main components of a refrigerator as an example of a home appliance according to an embodiment of the present invention. Referring to Fig. 6, the refrigerator, an example of a home appliance according to the present invention, may include a selecting unit 610, a displaying unit 620, a controller 630, a sensing unit 640, and a memory 650. The selecting unit 610, the displaying unit 620, the controller 630, the sensing unit 640, and the memory 650 are denoted with reference numerals different from the selecting unit 10, the displaying unit 20, the controller 30, the sensing unit 40, and the memory 50, respectively, as described above in connection with Fig. 2 for the purpose of being recognized as components of the refrigerator that is an example of the home appliance according to the present invention, but the description on the components shown in Fig. 2 may apply thereto. However, various examples of the sensing unit 640 are specifically illustrated in Fig. 6.

In this embodiment, the refrigerator may include a refrigerating compartment and a freezing compartment, a refrigerating compartment fan 661 for blowing cold air to the refrigerating compartment, a freezing compartment fan 662 for blowing cold air to the freezing compartment, a defrosting heater 663 provided when the refrigerator has a food defrosting function, and a condenser fan 664 for dissipating heat generated from a condenser condensing a coolant.

The sensing unit 640 may include a refrigerating compartment temperature sensor 641 sensing the temperature of the refrigerating compartment, a freezing compartment temperature sensor 642 sensing the temperature of the freezing compartment, a defrosting sensor 643 sensing frost generated on the surface of an evaporator to determine whether a defrosting operation is performed, a refrigerating compartment fan motor sensor 644 sensing whether the refrigerating compartment fan 661 normally operates, and/or a freezing compartment fan motor sensor 645 sensing whether the freezing compartment fan 662 normally operates.

Further, when the refrigerator has an ice maker to make ice, the ice maker may include a water path through which water necessary to make ice flows and an ice tray in which water coming through the water path is gathered and turns into ice in a predetermined shape. The sensing unit 640 may further include an ice maker path temperature sensor 646 measuring the temperature of water in the water path and an ice tray temperature sensor 647 measuring the temperature in the ice tray.

The images output through the displaying unit 620 of the refrigerator may include information (operation information) on values sensed by the sensing unit 641 to 647 and malfunction information (failure information) obtained based on the sensed values.

It may be understood by one of ordinary skill in the art that many other modifications and variations may be made to the present invention without departing from the essential features of the invention. Accordingly, the embodiments described thus far should be construed as being exemplary but not as limiting. The scope of the invention is defined by the claims rather than the detailed description above, and it should be also interpreted that all the modifications and variations induced from the meaning and scope of the claims and the equivalents thereof are also within the scope of the invention.

## Claims

1. A home appliance comprising:
a selecting unit (10) adapted for receiving a diagnosis command;
a displaying unit (20) adapted for outputting an image; and
a controller (30) adapted for performing control so that product information is converted into a plurality of images (a1, ..., an) according to the diagnosis command entered to the selecting unit (10) and the plurality of images (a1, ..., an) are sequentially output through the displaying unit (20),
wherein the controller (30) is adapted to perform control so that the product information is split into a plurality of unit data, each split unit data is encoded into a predetermined control signal, and the displaying unit (20) sequentially outputs images (a1, ..., an) corresponding to each unit data according to the control signal.

2. The home appliance of claim 1, wherein the displaying unit (120) includes a plurality of light emission members (121) that emit light in a predetermined pattern according to the control signal.

3. The home appliance of claim 2, wherein the displaying unit (120) has the plurality of light emission members (121) arranged vertically and horizontally in a grid pattern.

4. The home appliance of claim 2, wherein the displaying unit (120) further includes a positioning marking unit (122) adapted for marking a position where an image is recognized which is formed by a light emitting pattern of the plurality of light emission members (121).

5. The home appliance of claim 1, wherein the displaying unit (220) is adapted for sequentially outputting a plurality of QR (Quick Response) codes according to the controls signal.

6. A home appliance diagnosing system comprising:
a home appliance adapted for splitting product information into a plurality of unit data and encoding each split unit data into a predetermined control signal, converting the product information into a plurality of images (a1, ..., an) according to the control signals, and sequentially displaying the plurality of images (a1, ..., an);
a terminal adapted for sequentially recognizing the plurality of images (a1, ..., an) displayed on the home appliance, extracting the product information from the plurality of recognized images (a1, ..., an), and transmitting the product information through a network; and
a diagnosing server adapted for receiving the product information through the network and performing diagnosis on the home appliance based on the product information.

7. The home appliance diagnosing system of claim 6, wherein the terminal is a mobile terminal including a video capturing device.

8. The home appliance diagnosing system of claim 6, wherein the diagnosing server comprises:
a communication unit adapted for receiving the product information transmitted through the network;
a diagnosis data storing unit adapted for storing diagnosis data; and
a diagnosing unit adapted for performing diagnosis on the home appliance by comparing the product information received through the communication unit with the diagnosis data stored in the diagnosis data storing unit.

9. A home appliance diagnosing method comprising:
step (a) of converting information of a home appliance into a plurality of images (a1, ..., an) according to a diagnosis command entered through a selecting unit (10) (S1);
step (b) of sequentially outputting the plurality of images (a1, ..., an) converted in step (a) (S2); and
step (c) of sequentially recognizing the images (a1, ..., an) output in step (b), extracting the product information from the plurality of images (a1, ..., an) (S3), and performing diagnosis on the home appliance,
wherein step (a) comprises:
step (a-1) of splitting the product information into a plurality of unit data; and
step (a-2) of encoding each split unit data into a predetermined control signal; and
wherein step (b) comprises:
a step of sequentially outputting images (a1, ..., an) corresponding to each unit data through a displaying unit (20) according to the control signal.

10. The home appliance diagnosing method of claim, 9, wherein step (c) comprises:
a step of sequentially recognizing the images (a1 ..., an) output in step (b), extracting the product information from the images (a1, ..., an), and transmitting the product information through a network; and
a step of receiving the product information through the network and performing diagnosis on the home appliance based on the product information.

11. The home appliance diagnosing method of claim 9, wherein step (c) comprises,
a step of sequentially recognizing the images (a1, ..., an) output in step (b) and transmitting the images (a1, ..., an) through a network;
a step of extracting the product information from the sequence of images (a1, ..., an) transmitted through the network; and
a step of performing diagnosis on the home appliance based on the extracted product information.

12. The home appliance diagnosing method of claim 9, wherein step (b) comprises a step of forming the plurality of images (a1, ..., an) by controlling a light emitting pattern of a plurality of light emission members (121).

13. The home appliance diagnosing method of claim 9, wherein step (b) comprises a step of forming the plurality of images (a1, ..., an) in QR (Quick Response) codes.

## Patentansprüche

1. Haushaltsgerät, das umfasst:
eine Auswahleinheit (10), die zum Empfangen eines Diagnosebefehls ausgelegt ist;
eine Anzeigeeinheit (20), die zum Ausgeben eines Bildes ausgelegt ist; und
eine Steuereinheit (30), die zum Durchführen einer Steuerung, so dass Produktinformationen in mehrere Bilder (a1, ..., an) gemäß dem Diagnosebefehl umgesetzt werden, der in die Auswahleinheit (10) eingegeben wird, und die mehreren Bilder (a1, ..., an) nacheinander durch die Anzeigeeinheit (20) ausgegeben werden, ausgelegt ist,
wobei die Steuereinheit (30) dazu ausgelegt ist, eine Steuerung so durchzuführen, dass die Produktinformationen in mehrere Einheitsdaten aufgeteilt werden, wobei alle aufgeteilten Einheitsdaten in ein vorbestimmtes Steuersignal codiert werden, und die Anzeigeeinheit (20) nacheinander Bilder (a1, ..., an) entsprechend allen Einheitsdaten gemäß dem Steuersignal ausgibt.

2. Haushaltsgerät nach Anspruch 1, wobei die Anzeigeeinheit (120) mehrere Lichtemissionselemente (121) umfasst, die Licht in einem vorbestimmten Muster gemäß dem Steuersignal emittieren.

3. Haushaltsgerät nach Anspruch 2, wobei die Anzeigeeinheit (120) die mehreren Lichtemissionselemente (121) aufweist, die vertikal und horizontal in einem Gittermuster angeordnet sind.

4. Haushaltsgerät nach Anspruch 2, wobei die Anzeigeeinheit (120) ferner eine Positionsmarkierungseinheit (122) umfasst, die zum Markieren einer Position ausgelegt ist, in der ein Bild erkannt wird, das durch ein Lichtemissionsmuster der mehreren Lichtemissionselemente (121) gebildet wird.

5. Haushaltsgerät nach Anspruch 1, wobei die Anzeigeeinheit (220) zum sequentiellen Ausgeben von mehreren QR-Codes (Schnellreaktionscodes) gemäß dem Steuersignal ausgelegt ist.

6. Haushaltsgerät-Diagnosesystem, das umfasst:
ein Haushaltsgerät, das zum Aufteilen von Produktinformationen in mehrere Einheitsdaten und Codieren von allen aufgeteilten Einheitsdaten in ein vorbestimmtes Steuersignal, Umsetzen der Produktinformationen in mehrere Bilder (a1, ..., an) gemäß den Steuersignalen und sequentiellen Anzeigen der mehreren Bilder (a1, ..., an) ausgelegt ist;
ein Endgerät, das zum sequentiellen Erkennen der mehreren Bilder (a1, ..., an), die auf dem Haushaltsgerät angezeigt werden, Gewinnen der Produktinformationen aus den mehreren erkannten Bildern (a1, ..., an) und Übertragen der Produktinformationen über ein Netz ausgelegt ist; und
einen Diagnoseserver, der zum Empfangen der Produktinformationen über das Netz und Durchführen einer Diagnose an dem Haushaltsgerät auf der Basis der Produktinformationen ausgelegt ist.

7. Haushaltsgerät-Diagnosesystem nach Anspruch 6, wobei das Endgerät ein mobiles Endgerät mit einer Videoaufnahmevorrichtung ist.

8. Haushaltsgerät-Diagnosesystem nach Anspruch 6, wobei der Diagnoseserver umfasst:
eine Kommunikationseinheit, die zum Empfangen der Produktinformationen, die über das Netz übertragen werden, ausgelegt ist;
eine Diagnosedaten-Speichereinheit, die zum Speichern von Diagnosedaten ausgelegt ist; und
eine Diagnoseeinheit, die zum Durchführen einer Diagnose an dem Haushaltsgerät durch Vergleichen der Produktinformationen, die über die Kommunikationseinheit empfangen werden, mit den in der Diagnosedaten-Speichereinheit gespeicherten Diagnosedaten ausgelegt ist.

9. Haushaltsgerät-Diagnoseverfahren, das umfasst:
einen Schritt (a) zum Umsetzen von Informationen eines Haushaltsgeräts in mehrere Bilder (a1, ..., an) gemäß einem Diagnosebefehl, der durch eine Auswahleinheit (10) eingegeben wird (S1);
einen Schritt (b) zum sequentiellen Ausgeben der mehreren Bilder (a1, ..., an), die in Schritt (a) umgesetzt werden (S2); und
einen Schritt (c) zum sequentiellen Erkennen der Bilder (a1, ..., an), die in Schritt (b) ausgegeben werden, Gewinnen der Produktinformationen aus den mehreren Bildern (a1, ..., an) (S3) und Durchführen einer Diagnose an dem Haushaltsgerät,
wobei Schritt (a) umfasst:
einen Schritt (a-1) zum Aufteilen der Produktinformationen in mehrere Einheitsdaten; und
einen Schritt (a-2) zum Codieren von allen aufgeteilten Einheitsdaten in ein vorbestimmtes Steuersignal; und
wobei Schritt (b) umfasst:
einen Schritt zum sequentiellen Ausgeben von Bildern (a1, ..., an), die allen Einheitsdaten entsprechen, durch eine Anzeigeeinheit (20) gemäß dem Steuersignal.

10. Haushaltsgerät-Diagnoseverfahren nach Anspruch 9, wobei Schritt (c) umfasst:
einen Schritt zum sequentiellen Erkennen der Bilder (a1, ..., an), die in Schritt (b) ausgegeben werden, Gewinnen der Produktinformationen aus den Bildern (a1, ..., an) und Übertragen der Produktinformationen über ein Netz; und
einen Schritt zum Empfangen der Produktinformationen über das Netz und Durchführen einer Diagnose an dem Haushaltsgerät auf der Basis der Produktinformationen.

11. Haushaltsgerät-Diagnoseverfahren nach Anspruch 9, wobei Schritt (c) umfasst
einen Schritt zum sequentiellen Erkennen der Bilder (a1, ..., an), die in Schritt (b) ausgegeben werden, und Übertragen der Bilder (a1, ..., an) über ein Netz;
einen Schritt zum Gewinnen der Produktinformationen aus der Sequenz von Bildern (a1, ..., an), die über das Netz übertragen werden; und
einen Schritt zum Durchführen einer Diagnose an dem Haushaltsgerät auf der Basis der gewonnenen Produktinformationen.

12. Haushaltsgerät-Diagnoseverfahren nach Anspruch 9, wobei Schritt (b) einen Schritt zum Erzeugen der mehreren Bilder (a1, ..., an) durch Steuern eines Lichtemissionsmusters von mehreren Lichtemissionselementen (121) umfasst.

13. Haushaltsgerät-Diagnoseverfahren nach Anspruch 9, wobei Schritt (b) einen Schritt zum Erzeugen der mehreren Bilder (a1, ..., an) in QR-Codes (Schnellreaktionscodes) umfasst.

## Revendications

1. Appareil ménager comprenant :
une unité de sélection (10) apte à recevoir une commande de diagnostic ;
une unité d'affichage (20) apte à délivrer une image ; et
un organe de commande (30) apte à effectuer une commande de sorte que des informations de produit soient converties en une pluralité d'images (a1, ..., an) en fonction de la commande de diagnostic entrée dans l'unité de sélection (10) et la pluralité d'images (a1, ..., an) sont séquentiellement délivrées par l'intermédiaire de l'unité d'affichage (20),
dans lequel l'unité de commande (30) est apte à effectuer une commande de sorte que les informations de produit soient divisées en une pluralité de données d'unité, chaque donnée d'unité divisée est codée en un signal de commande prédéterminé, et l'unité d'affichage (20) délivre séquentiellement des images (a1, ..., an) correspondant à chaque donnée d'unité en fonction du signal de commande.

2. Appareil ménager selon la revendication 1, dans lequel l'unité d'affichage (120) comprend une pluralité d'organes d'émission de lumière (121) qui émettent une lumière dans un motif prédéterminé en fonction du signal de commande

3. Appareil ménager selon la revendication 2, dans lequel l'unité d'affichage (120) comprend la pluralité d'organes d'émission de lumière (121) agencés verticalement et horizontalement dans un motif de grille.

4. Appareil ménager selon la revendication 2, dans lequel l'unité d'affichage (120) comprend en outre une unité de marquage de positionnement (122) apte à marquer une position à laquelle il est reconnu une image formée par un motif d'émission de lumière de la pluralité d'organes d'émission de lumière (121).

5. Appareil ménager selon la revendication 1, dans lequel l'unité d'affichage (220) est apte à délivrer séquentiellement une pluralité de codes de réponse rapide, QR, en fonction du signal de commande.

6. Système de diagnostic d'appareil ménager comprenant :
un appareil ménager apte à diviser des informations de produit en une pluralité de données d'unité et à coder chaque donnée d'unité divisée en un signal de commande prédéterminé, convertir les informations de produit en une pluralité d'images (a1, ..., an) en fonction des signaux de commande, et afficher séquentiellement la pluralité d'images (a1, ..., an) ;
un terminal apte à reconnaître séquentiellement la pluralité d'images (a1, ..., an) affichées sur l'appareil ménager, extraire les informations de produit de la pluralité d'images reconnues (a1, ..., an) et transmettre les informations de produit par l'intermédiaire d'un réseau ; et
un serveur de diagnostic apte à recevoir les informations de produit par l'intermédiaire du réseau et effectuer un diagnostic sur l'appareil ménager sur la base des informations de produit.

7. Système de diagnostic d'appareil ménager selon la revendication 6, dans lequel le terminal est un terminal mobile comprenant un dispositif d'acquisition de vidéo.

8. Système de diagnostic d'appareil ménager selon la revendication 6, dans lequel le serveur de diagnostic comprend :
une unité de communication apte à recevoir les informations de produit transmises par l'intermédiaire du réseau ;
une unité de mémorisation de données de diagnostic apte à mémoriser des données de diagnostic ; et
une unité de diagnostic apte à effectuer un diagnostic sur l'appareil ménager en comparant les informations de produit reçues par l'intermédiaire de l'unité de communication aux données de diagnostic mémorisées dans l'unité de mémorisation de données de diagnostic.

9. Procédé de diagnostic d'appareil ménager comprenant :
l'étape (a) de la conversion d'informations d'un appareil ménager en une pluralité d'images (a1, ..., an) en fonction d'une commande de diagnostic entrée par l'intermédiaire d'une unité de sélection (10) (S1) ;
l'étape (b) de la sortie séquentielle de la pluralité d'images (a1, ..., an) converties à l'étape (a) (S2) ; et
l'étape (c) de la reconnaissance séquentielle des images (a1, ..., an) délivrées à l'étape (b), l'extraction des informations de produit de la pluralité d'images (a1, ..., an) (S3), et l'exécution d'un diagnostic sur l'appareil ménager,
dans lequel l'étape (a) comprend :
l'étape (a-1) de la division des informations de produit en une pluralité de données d'unité ; et
l'étape (a-2) du codage de chaque donnée d'unité divisée en un signal de commande prédéterminé ; et
dans lequel l'étape (b) comprend :
l'étape de sortie séquentielle d'images (a1, ..., an) correspondant à chaque donnée d'unité par l'intermédiaire d'une unité d'affichage (20) en fonction du signal de commande.

10. Procédé de diagnostic d'appareil ménager selon la revendication 9, dans lequel l'étape (c) comprend :
l'étape de la reconnaissance séquentielle des images (a1, ..., an) délivrées à l'étape (b), l'extraction des informations de produit des images (a1, ..., an), et la transmission des informations de produit par l'intermédiaire d'un réseau ; et
l'étape de la réception des informations de produit par l'intermédiaire du réseau et l'exécution d'un diagnostic sur l'appareil ménager sur la base des informations de produit.

11. Procédé de diagnostic d'appareil ménager selon la revendication 9, dans lequel l'étape (c) comprend :
l'étape de la reconnaissance séquentielle des images (a1, ..., an) délivrées à l'étape (b) et la transmission des images (a1, ..., an) par l'intermédiaire d'un réseau ;
l'étape de l'extraction des informations de produit de la séquence d'images (a1, ..., an) transmises par l'intermédiaire du réseau ; et
l'étape de l'exécution d'un diagnostic sur l'appareil ménager sur la base des informations de produit extraites.

12. Procédé de diagnostic d'appareil ménager selon la revendication 9, dans lequel l'étape (b) comprend l'étape de la formation de la pluralité d'images (a1, ..., an) en commandant un motif d'émission de lumière d'une pluralité d'organes d'émission de lumière (121).

13. Procédé de diagnostic d'appareil ménager selon la revendication 9, dans lequel l'étape (b) comprend l'étape de la formation de la pluralité d'images (a1, ..., an) dans des codes de réponse rapide, QR.
